# EUROPÄISCHE PATENTANMELDUNG

(11) **EP 2 286 937 A1**
(43) Veröffentlichungstag der Anmeldung: **23.02.2011**
(21) Anmeldenummer: 10008529.9
(22) Anmeldetag: 16.08.2010
(51) Int. Cl.: B21F 45/06, B60J 10/00

(54) **Außen verstärkter Drahtgrundkörper**

(30) Priorität: 14.08.2009 DE 102009037598
(71) Anmelder: Rhodius GmbH, 91781 Weissenburg (DE)
(72) Erfinder: Kopetzky, Robert, Dr., 91207 Lauf (DE); Appel, Erwin, 91785 Pleinfeld (DE)
(74) Vertreter: Weigel, Matthias

(57) **Zusammenfassung**

Die Erfindung betrifft einen Drahtgrundkörper (1) zum Verstärken einer Dichtung aus elastischem Material, wie einer Türdichtung, wobei der Drahtgrundkörper (1) einerseits einen Draht (2) aufweist, der sich in mäanderförmigen Buchten (3) entlang einer Längsachse (4) des Drahtgrundkörpers (1) erstreckt und um zumindest eine zur Längsachse (4) parallele Biegeachse (7) gebogen ist, sowie andererseits mehrere den Draht (2) im Wesentlichen rechtwinklig kreuzende und vorzugsweise stauchfest ausgebildete Zugmittel (5) aufweist, die zum Draht (2) lagebezogen relativ zueinander festgelegt sind, wobei die an außen liegenden Enden der Buchten angebrachten Zugmittel (5) zu einem weiter innen liegenden Zugmittel (5) so ausgebildet und an dem Draht (2) angebracht sind, dass bei Biegung des Drahtgrundkörpers (1) um eine quer zur Biegeachse (7) angeordnete Umformachse (8) eine Verformung des Drahtgrundkörpers (1) im Bereich des Zugmittels (5) größtenteils unterbunden ist. Die Erfindung betrifft ferner eine Dichtung mit einem entsprechenden Drahtgrundkörper.

## Beschreibung

Die Erfindung betrifft einen Drahtgrundkörper zum Verstärken einer Dichtung aus elastischem Material, wie eine Türdichtung, wobei der Drahtgrundkörper einerseits einen Draht aufweist, der sich in mäanderförmigen Buchten entlang einer Längsachse des Drahtgrundkörpers erstreckt und um zumindest eine zur Längsachse parallele Biegeachse gebogen ist, sowie andererseits mehrere den Draht im Wesentlichen rechtwinklig kreuzende und vorzugsweise stauchfest ausgebildete Zugmittel aufweist, die zum Draht lagebezogen relativ zueinander festgelegt sind.

Die Erfindung betrifft auch eine Dichtung mit einem Drahtgrundkörper, wobei die Dichtung insbesondere als Autotürdichtung bei einem Kraftfahrzeug, wie einem Pkw oder Lkw Anwendung findet. Sie findet aber auch in der Luft- und Schifffahrt sowie bei öffentlichen Verkehrsmitteln, die auch schienengebunden sein können, und bei Industriefahrzeugen Anwendung. Es ist ferner ein stationärer Einsatz in Gebäuden vorgesehen.

Unter Draht wird hier ein relativ dünnes, langes und biegsames Stück Metall mit beliebigem, vorzugsweise kreisförmigem, Querschnitt verstanden. Als Querschnittsformen des Drahtes werden dabei auch Rechtecksquerschnitte, wie sie bei Flachdrähten vorkommen, Polygonquerschnitte und elliptische Querschnitte umfasst. Die Drähte sind insbesondere aus Eisen, Kupfer, Messing, Aluminium, Silber, Gold oder Edelstahl sowie entsprechenden Legierungen bestehend. Insbesondere sind Legierungen mit Magnesium umfasst.

Unter Zugmittel werden sämtliche Elemente verstanden, die in der Längsrichtung zugfest ausgebildet sind. Dies umfasst Gewebebänder, Fasern, Filamente und Fäden einerseits, aber auch Drähte andererseits. Für diese Zugmittel bietet sich die Verwendung unterschiedlicher Materialien, wie Metalle und deren Legierungen, an. Allerdings sind auch bestimmte textile Materialien und Kunststoffmaterialien, sowie Aramidfasern und Kohlestofffasern und Glasfasern geeignet.

Auch können Garne verwendet werden. Diese Garne können nicht nur zur zusätzlichen Fixierung der Garne relativ zu dem Draht verklebt, beschichtet und/oder mit Harz getränkt werden. So kann einerseits ein bei einem Aufwickeln verursachtes Verschieben der Garne relativ zum Draht verhindert werden und andererseits das Gesamtgebilde, also der Drahtkörper, versteift bzw. verfestigt werden.

Aus dem Stand der Technik sind Drahtgrundkörper nach dem Oberbegriff von Anspruch 1 bekannt. Solche Drahtgrundkörper werden beispielsweise von der Firma Hope Global als Produkte unter der Markenbezeichnung "Form-A-Grip" vertrieben. Dabei sind die Zugmittel aus Fasern oder Drähten ausgebildet und im Wesentlichen äquidistant zueinander über die gesamte Breite des Drahtgrundkörpers verteilt.

Die Drahtgrundkörper, die als Verstärkung von Türdichtungen Verwendung finden, geben den Türdichtungen eine ausreichende Formsteifigkeit. Die entsprechenden Drahtgrundkörper sind nach Fertigstellung der Türdichtung von dem elastischen Material, wie Gummi oder gummiähnlichem Kunststoff umgeben. Der entsprechende Drahtgrundkörper bildet ein sogenanntes Endoskelett und ist in die Türdichtung eingebettet. Eine weitere Gegendichtung greift in die durch die U-förmige Biegung gebildete Nut dann ein, wenn die durch die Tür zu verschließende Öffnung abgedichtet ist.

Da die Türdichtung im Regelfall um die gesamte Außenkante der Tür umlaufend ausgestaltet ist, muss der Drahtgrundkörper mehrmals um eine Umformachse gebogen werden, wobei die Umformachse orthogonal zur Längsachse bzw. zur Biegeachse ausgerichtet ist.

Beim Biegen des Drahtgrundkörpers um die Umformachse treten Spannungen im Inneren des Drahtgrundkörpers auf. So befinden sich die Enden der Buchten auf einem gedachten ersten Kreis, der einen geringeren Radius aufweist, als der den Enden der Buchten gegenüberliegende Bereich. D.h., der den Buchten gegenüberliegende Bereich des Drahtgrundkörpers liegt nach dem Umbiegen um die Umformachse auf einem gedachten Kreis, mit einem zu dem ersten Kreis größeren Radius.

Im Stand der Technik werden durch die Zugmittel sowohl die Enden der Buchten als auch die von den Enden der Buchten beabstandeten Bereiche des Drahtgrundkörpers in ihrer Position direkt oder indirekt festgelegt.

Ein Ausbauchen des Drahtgrundkörpers ist allerdings häufig die Folge, wenn der U-förmige Vorformling um die Umformachse gebogen wird. Die dabei auftretenden Spannungen können so stark sein, dass der Drahtgrundkörper an einigen Stellen ausbeult oder sogar bricht. Dies beeinträchtigt dann die Formstabilität und Formsteifigkeit des Drahtgrundkörpers negativ. Dadurch verschlechtert sich auch die Formhaltigkeit der Türdichtung.

Aus dem Stand der Technik sind auch Alternativen zu solchen Drahtgrundkörpern bekannt, nämlich aus geschlitzten Blechen gefertigte Grundkörper, wobei von einem Verbindungssteg sich gegenüberliegende, von dem Verbindungssteg abstehende Laschen angeordnet sind. Die Laschen auf einer Seite des Verbindungssteges sind zueinander äquidistant angeordnet.

Solche auch als geschlitzte Bleche bezeichnete Grundkörper sind um eine Biegeachse U-förmig gebogen ausgebildet, wobei die Biegeachse parallel zu einer Längsachse des Bleches im Bereich des Verbindungssteges angeordnet ist.

Die vorher beschriebenen Bruchprobleme, die mit einem Ausbauchen auf der Innenseite des Drahtgrundkörpers, also im Bereich der Enden der Buchten einhergehen, ist bei solchen geschlitzten Blechen nicht festzustellen, da die Enden der Laschen zueinander nicht festgelegt sind.

Allerdings sind solche geschlitzten Bleche in der Herstellung wesentlich teurer als aus Draht gefertigte Grundkörper.

Es ist daher die Aufgabe der vorliegenden Erfindung, der Allgemeinheit Grundkörper aus Draht zur Verfügung zu stellen, die so kostengünstig wie bisherige Drahtgrundkörper sind, aber die Vorteile von aus geschlitzten Blechen gefertigten Grundkörpern aufweisen. Die Nachteile beider bisherigen Lösungen sollen vermieden werden.

Diese Aufgabe wird erfindungsgemäß dadurch gelöst, dass die an außen liegenden Enden der Buchten angebrachten Zugmittel zu einem weiter innen liegenden Zugmittel so ausgebildet und an dem Draht angebracht sind, dass bei Biegung des Drahtgrundkörpers um eine quer zur Biegeachse angeordnete Umformachse, eine Verformung des Drahtgrundkörpers im Bereich des Zugmittels größtenteils unterbunden ist.

Auf diese Weise wird das Ausbilden von Wellenausprägungen auf der der Umformachse nahen Bereiche, also in den Endbereichen der Buchten, vermieden. Die Formhaltigkeit des Drahtgrundkörpers wird verbessert. Die Verbesserung der Formhaltigkeit des Drahtgrundkörpers mit einfachen und kostengünstigen Mitteln wird dabei erreicht.

Die Aufgabe wird auch dadurch gelöst, dass eine Dichtung einen solchen verstärkten Drahtgrundkörper umfasst.

Vorteilhafte Ausführungsbeispiele sind in den Unteransprüchen beansprucht und werden nachfolgend näher erläutert.

So ist es ferner von Vorteil, wenn die Verbindung zwischen dem an den Enden der Buchten befindlichem Zugmittel und dem Draht besonders fest ausgebildet ist. Durch das besonders feste Ausbilden der Verbindung ist es dem Zugmittel möglich, formstabilisierend auf den Draht einzuwirken.

Es ist des Weiteren von Vorteil, wenn der Drahtgrundkörper um zwei zur Längsachse parallel oder quer angeordnete Biegeachsen im Wesentlichen U-förmig gebogen ist. Dadurch wird die Variabilität erhöht. Die Biegeachsen können zur Längsachse auch unterschiedliche Winkel einnehmen.

Besonders feste und langlebige Verbindungen lassen sich dann realisieren, wenn die Verbindung als Lötverbindung, als Schweißverbindung oder als Klebeverbindung ausgebildet ist.

Wenn die Verbindung über eine Faser realisiert ist, die den Draht mit den Zugmitteln verknüpft, so kann auf herkömmliche Flechttechniken zurückgegriffen werden und unter Umständen sogar der Drahtgrundkörper relativ problemlos wieder auseinandergebaut werden. Eine gewisse Grundelastizität bleibt vorhanden. Kleine Fehler können so ausgeglichen werden.

Es ist auch von Vorteil, wenn die an den Enden der Buchten befindlichen Zugmittel dicker als ein weiter innen angebrachtes Zugmittel ausgebildet ist. Die Bruchfestigkeit wird somit erhöht.

Die Bruchfestigkeit wird noch weiter erhöht, wenn die an den Enden der Buchten befindlichen Zugmittel aus mehreren ineinander verflochtenen Drahtsträngen aufgebaut sind. Auch kann so Material mit nur einer Stärke verwendet werden und doch unterschiedliche Bruchfestigkeiten an unterschiedlichen Stellen realisiert werden. Ein Leichtbauprodukt lässt sich dadurch ebenfalls realisieren.

Die Fertigbarkeit wird dann verbessert, wenn der Drahtgrundkörper als Gewirk, wie ein Gestrick oder eine Häkelware, ausgebildet ist. Es ist dabei ferner von Vorteil, wenn der Draht und die Zugmittel aus ein und demselben Draht gebildet sind. Dabei ist es nicht notwendig, dass die einzelnen Abschnitte voneinander getrennt ausgebildet sind.

Besonders schnell lässt sich der Drahtgrundkörper fertigen, wenn dieser als Geflecht ausgebildet ist.

Um die Dauerfestigkeit des Drahtgrundkörpers zu erhöhen, ist es von Vorteil, wenn zumindest einer der Drähte eine Korrosionsbeschichtung aufweist.

Um die Kosten für die Korrosionsbeschichtung zu mindern, ist es von Vorteil, wenn diese als Ölbeschichtung oder als chemischer Schutz ausgeführt ist. Zwar ist es auch möglich, Zinkbeschichtungen zu verwenden, doch werden bei Ausgestaltung gemäß des eben skizzierten Ausführungsbeispiels günstigere Ausgangsmaterialien verwendbar. Die Ölbeschichtung weist auch noch den zusätzlichen Vorteil auf, dass diese bei dem Biegen der einzelnen Drähte die Oberflächenreibung verringert, was zu einer besseren Güte des Drahtgrundkörpers führt.

Wenn die Umformachse orthogonal zur Biegeachse angeordnet ist, so können kostengünstige Maschinen bei der Herstellung verwendet werden und der Drahtgrundkörper nachbearbeitungsfrei bei einer entsprechenden Autotürdichtung weiterverwendet werden.

Die Erfindung wird nachfolgend auch mit Hilfe einer Zeichnung näher erläutert. Es zeigen:
- Fig. 1: einen unverbogenen Drahtgrundkörper der von der Firma Hope Global unter der Bezeichnung Form-A-Grip vertrieben wird,
- Fig. 2: einen unverbogenen aus einem geschlitzten Blech gefertigten Grundkör- per aus dem Stand der Technik,
- Fig. 3: ein erstes Ausführungsbeispiel eines unverbogenen Drahtgrundkörpers,
- Fig. 4: einen zu einem Vorformling gebogenen Drahtgrundkörper aus Fig. 3 in perspektivischer Ansicht,
- Fig. 5: einen um die Umformachse nochmals umgebogenen Vorformling aus Fig. 4,
- Fig. 6: eine Variante eines unverbogenen Drahtgrundkörpers,
- Fig. 7: eine zweite Variante eines erfindungsgemäßen Drahtgrundkörpers im unverbogenen Zustand,
- Fig. 8: das in Fig. 7 als VIII gekennzeichnete Detail,
- Fig. 9: einen um eine Biegeachse U-förmig gebogenen erfindungsgemäßen Drahtgrundkörper, basierend auf der Variante gemäß Fig. 7 und
- Fig. 10: einen um die Biegeachse und die Umformachse gebogenen Draht- grundkörper, basierend auf der Variante gemäß Fig. 6.

Die Figuren sind lediglich schematischer Natur und dienen nur dem Verständnis der Erfindung.

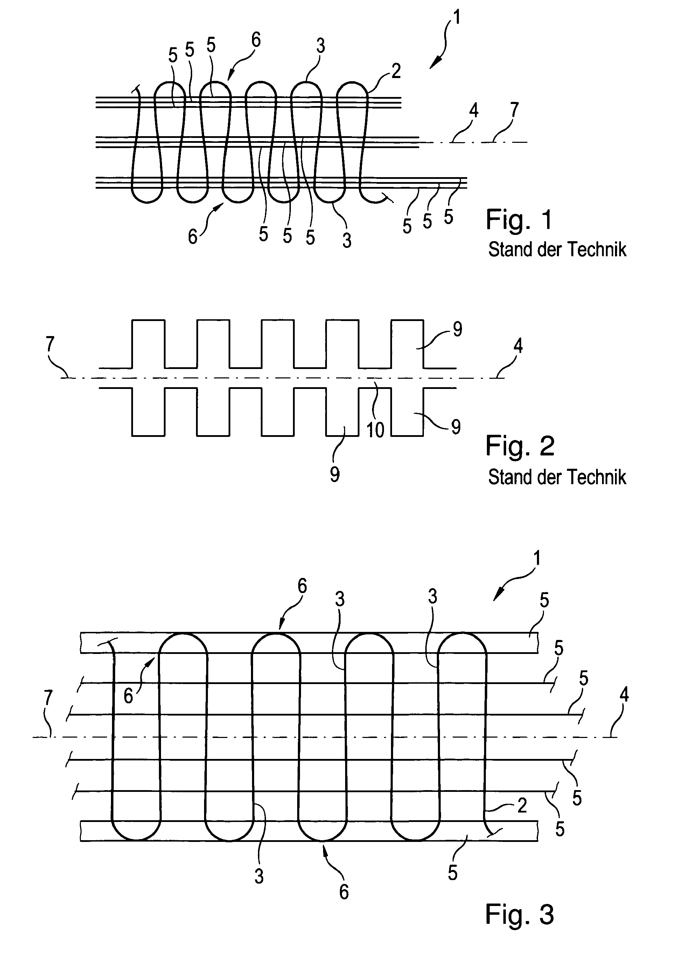

In Fig. 1 ist ein Drahtgrundkörper 1 dargestellt. Der Drahtgrundkörper 1 weist einen Draht 2 auf. Der Draht 2 erstreckt sich in mäanderförmigen Buchten 3 entlang einer Längsachse 4 des Drahtgrundkörpers. Mehrere Zugmittel 5 erstrecken sich parallel zur Längsachse 4 über dem Draht 2 und/oder unter diesem. Insgesamt sind neun Zugmittel 5 dargestellt, die sowohl um die Längsachse 4 herum angeordnet sind, als auch an Endbereichen 6 der Buchten 3 mit dem Draht 2 verbunden sind. Die Zugmittel 5 und der Draht 2 sind miteinander in Kontakt.

Die Zugmittel 5 können aus demselben Material wie der Draht 2 bestehen, insbesondere aus metallischem Werkstoff. Allerdings ist es möglich, dass die Zugmittel auch als Fäden oder Fasern aus Kunststoff, abweichend vom Draht 2, ausgebildet sind.

Der Drahtgrundkörper 1 aus Fig. 1 ist im flachen Zustand dargestellt und wird für den fertigen Zustand zweimal gebogen, nämlich einmal um eine Biegeachse 7, die immer parallel zur Längsachse 4 ausgerichtet ist und im dargestellten Fall deckungsgleich mit dieser ist. Nachfolgend wird der dabei erreichte Vorformling um eine in Fig. 1 nicht dargestellte Umformachse 8 gebogen.

Ein weiterer Grundkörper ist in Fig. 2 dargestellt. Dieser Grundkörper ist jedoch nicht aus Draht gebildet, sondern aus geschlitztem Blech. Das geschlitzte Blech weist Laschen 9 auf, die über einen Verbindungssteg 10 miteinander in Verbindung stehen. Der Verbindungssteg 10 beherbergt auch eine Längsachse 4, zu der die Laschen 9 symmetrisch sind.

Auch dieser Grundkörper ist noch im unverbogenen Zustand dargestellt und wird ebenfalls um eine Biegeachse 7 U-förmig zu einem Vorformling verbogen. Die Biegeachse 7 liegt deckungsgleich auf der Längsachse 4.

In Fig. 3 ist ein erstes Ausführungsbeispiel der Erfindung dargestellt.

Wie auch in dieser Figur werden in allen Figuren für die gleichen Elemente dieselben Bezugszeichen verwendet.

In Fig. 3 ist der noch flache, d.h. unverbogene Drahtgrundkörper 1 dargestellt. Die außen, im Bereich der Ränder des Drahtgrundkörpers 1 vorhandenen Zugmittel 5 sind besonders dick und fest ausgeführt. Auch die Verbindung zwischen diesen besonders dicken Zugmittel 5 und dem Draht 2 ist besonders fest ausgebildet. Im dargestellten Ausführungsbeispiel sind diese außen liegenden Zugmittel 5 und der Draht 2 miteinander verschweißt. Alternativ bieten sich auch Verknüpfungstechniken an, z.B. Flechttechniken, Häkeltechniken oder Stricktechniken. Auch die Verwendung von Löt-, Schweiß- oder Klebeverbindungen ist denkbar.

Insbesondere bietet sich ein Rollnahtschweißverfahren an. Dadurch können die als Drähte ausgebildeten Zugmittel 5 an unterschiedlichen Stellen mit dem in einer Schlaufengeometrie vorliegenden Draht 2 fixiert werden. Auch eine Fixierung unter Einsatz eines Lasers ist von Vorteil, da dann eine Fertigung im Durchlaufverfahren erleichtert wird. Werden Flachdrähte verwendet, ist dies vorteilhaft für eine bzgl. der Biegesteifigkeit optimierten Ausgestaltung.

In dem in Fig. 3 dargestellten Ausführungsbeispiel ist der Draht 2 auf die äußersten beiden Zugmittel 5 aufgelegt und dann mit diesen verbunden. Dasselbe gilt für die weiter innen liegenden Zugmittel 5. Es ist jedoch möglich, dass die Zugmittel 5 auch auf den Draht 2 gelegt sind und dann mit diesem verbunden werden. Auch ist ein wechselweises Anliegen eines Zugmittels an der Ober- und Unterseite des Drahts 2 möglich. Auch ist es möglich, dass die Zugmittel 5 alternierend abwechselnd über oder unter dem Draht 2 hindurch geführt sind.

Bei besonders dicker Ausgestaltung der äußersten beiden Zugmittel 5 ist es auch möglich, dass diese beiden äußeren Zugmittel 5 den Draht 2 umgreifen. Sämtliche Kombinationen dieser Varianten sind ebenfalls möglich.

Wie der schematischen Figur zu entnehmen ist, sind die weiter innen liegenden Zugmittel 5, also jene Zugmittel 5, die zwischen den beiden äußersten Zugmitteln 5 liegen, und benachbart zu der Längsachse 4 bzw. Biegeachse 7 sind, kleiner als der Querschnitt der außen liegenden Zugmittel 5.

Die als zweite Drähte ausgeformten Zugmittel 5, welche an den Endbereichen 6 angebracht sind, sind in Fig. 3 gut zu erkennen.

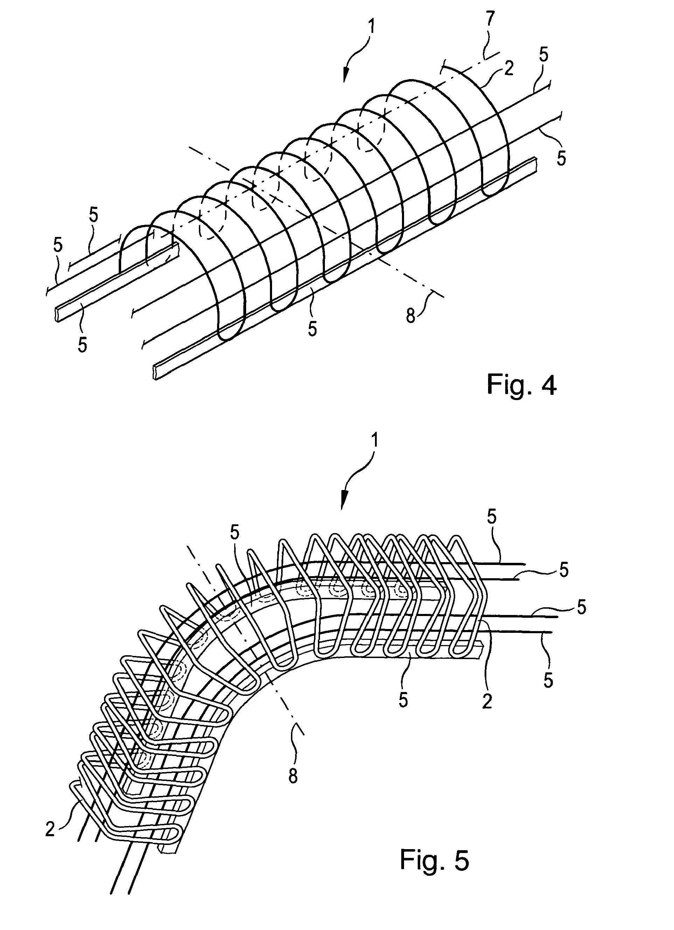

In Fig. 4 ist der um die Biegeachse 7 U-förmig umgeformte Drahtgrundkörper, wie er ursprünglich in Fig. 3 ausgebildet war, dargestellt.

Der Drahtgrundkörper 1 aus Fig. 4 ist nach einer nachfolgenden Umbiegung um die Umformachse 8 nochmals schematisch dargestellt.

In der dann erreichten und in Fig. 5 dargestellten Form wird der Drahtgrundkörper 1 nachfolgend dann mit einem elastischen Material umgeben, um als Autotürdichtung zu dienen.

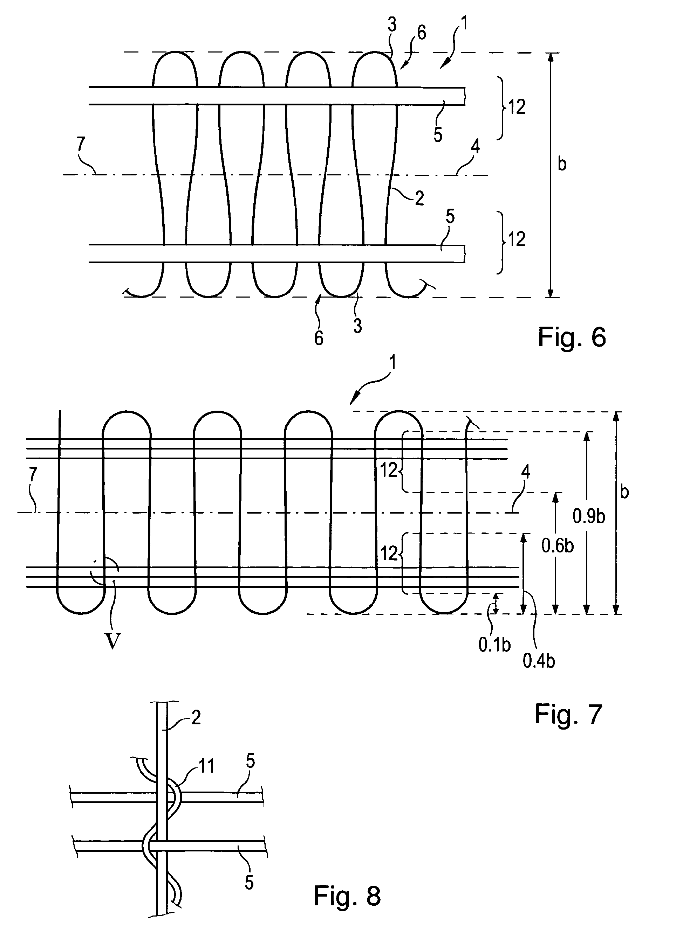

Der in Fig. 6 dargestellte Drahtgrundkörper 1 ist noch im unverbogenem Zustand dargestellt und weist eine Breite b auf, die durch die maximale Ausdehnung der Endbereiche 6 der Buchten 3 festgelegt ist. Der Draht 2 wird von zwei Zugmitteln 5 umschlossen. Die Zugmittel 5 können als zopfartige Drähte ausgebildet sein. Zur Verbindung des Drahtes 2 mit den Zugmitteln 5 bieten sich Strick- und/oder Häkeltechniken an. Zusätzlich ist es möglich, in den Berührungsbereichen des Drahtes 2 mit den Zugmitteln 5 Kleber einzubringen, insbesondere UVaushärtenden Kleber. Die Verwendung eines solchen Klebers bietet sich auch in anderen Varianten an, insbesondere in der nach den Fig. 7, 8 und 9 dargestellten Variante.

In Fig. 7 ist diese zweite Variante eines Drahtgrundkörpers 1 dargestellt. Hier sind insgesamt sechs Zugmittel 5 vorhanden, die beabstandet zu der Biegeachse 7, die in den beiden Varianten deckungsgleich mit der Längsachse 4 ist, angeordnet sind. Jeweils zwei Zugmittel 5 sind auf der einen Seite der Biegeachse 7 angeordnet.

Der Detailabschnitt V ist in Fig. 8 näher dargestellt, wobei aus dieser Figur dann ersichtlich wird, dass eine als Draht ausgebildete Faser 11 für die Lagefestlegung des Drahtes 2 zu den Zugmitteln 5 zuständig ist. Die Faser 11 umgreift abwechselnd den Draht 2 und die Zugmittel 5.

Aus Fig. 4 ist auch die Anordnung eines Anbringbereiches beiderseits der Biegeachse 7 entnehmbar. Dieser Anbringbereich 12 ist zwischen 10% und 40 % der Breite bzw. zwischen 60 % und 90 % der Breite b des Drahtgrundkörper 1 in unverbogenem Zustand angeordnet.

Auch in der Variante gemäß Fig. 6 ist der Anbringbereich in einem vergleichbaren Abschnitt angeordnet, wie bei der Variante gemäß Figur 7.

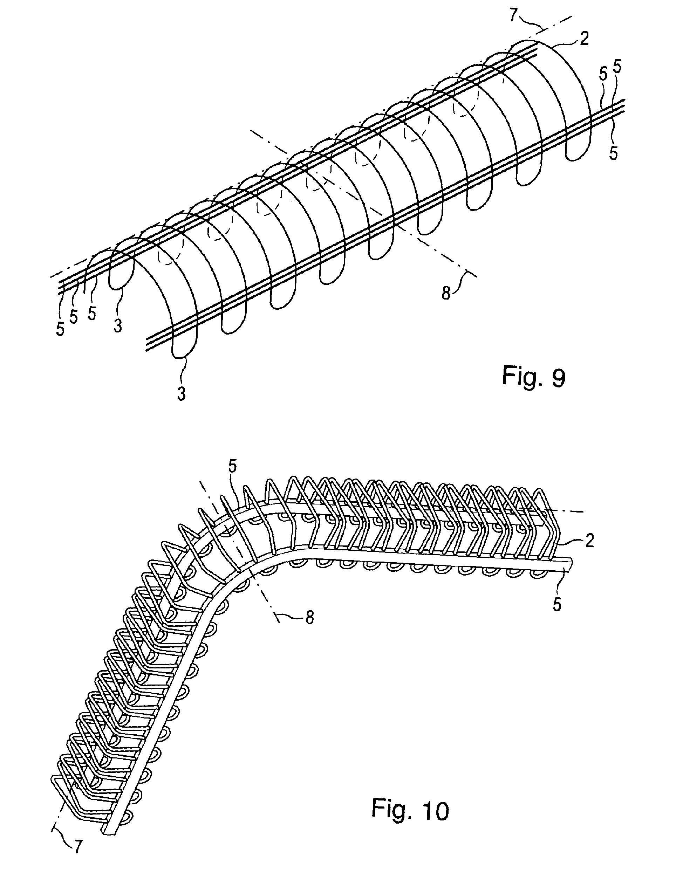

In Fig. 9 ist für beide Varianten exemplarisch die U-förmige Ausformung des Drahtgrundkörpers am Beispiel der zweiten Variante dargestellt. Die nachfolgende

Umbiegung des Vorformlings um die Umformachse 8 ist noch nicht dargestellt. Aus Gründen der Übersichtlichkeit sind die hinteren Buchten 3 des Drahtes 2 nur gestrichelt dargestellt. Auch sind die hinten liegenden Zugmittel 5 nur abschnittsweise dargestellt.

In Fig. 10 ist der zweifach umgebogene Drahtgrundkörper 1 des ersten Ausführungsbeispieles dargestellt. Es ist gut zu erkennen, dass die beiden Zugmittel 5 in den Bereich einer neutralen Faser des zweifach umgebogenen Drahtgrundkörpers 1 gelegt sind.

Der fertiggestellte Drahtgrundkörper 1 wird an den Zugmitteln zur Fertigstellung verbracht und dort dann von Gummi, Kautschuk oder ähnlichen Materialien umspritzt, um so die fertige Außentürdichtung zu bilden.

Als Materialien für die einzelnen Drähte bietet sich Kohlenstoffstahl an. Solche Drähte sollen eine Zugfestigkeit von 700 bis 900 N/mm2 aufweisen, vorzugsweise 36 g/m wiegen und einen Durchmesser von 0,75 mm haben.

Drähte mit einem flachen Querschnitt und einer hohen Zugfestigkeit, die 4,5 g/m wiegen, bieten sich zur Verwendung als Zugmittel 5 oder als Fasern 11 an. Es ist jedoch auch möglich, dass sowohl für den Draht 2 als auch die Zugmittel 5 und/oder die Faser 11 dieselbe Drahtsorte verwendet wird.

Wenn in einem speziellen Ausführungsbeispiel die Zugmittel 5 ebenfalls als Drähte ausgebildet sind, wird der Draht 2 dann als erster Draht und das Zugmittel 5 als zweiter Draht zu bezeichnen sein. In diesem Ausführungsbeispiel werden zur Ortsfestlegung des ersten und zweiten Drahtes miteinander, als dritte Drähte ausgebildete Fasern 11 verwendet.

Es bietet sich an, den Draht zu verzinken oder vorzugsweise unverzinkt zu verwenden, jedoch dann auf eine Ölbenetzung oder einen chemischen Korrosionsschutz zu achten.

Unterschiedliche Querschnitte, auch nur abschnittsweise variierende Querschnitte, haben sich ebenfalls als vorteilhaft herausgestellt, nämlich elliptische, polygonale, runde und rechteckförmige Querschnitte. Der Bereich in dem sich die Drähte berühren, kann auch komprimiert ausgestaltet sein.

Bei der Herstellung bietet sich ferner an, auf Häkel- oder Strickmaschinen zurückzugreifen.

### Bezugszeichenliste:

- 1: Drahtgrundkörper
- 2: Draht
- 3: Bucht
- 4: Längsachse
- 5: Zugmittel
- 6: Endbereich
- 7: Biegeachse
- 8: Umformachse
- 9: Lasche
- 10: Verbindungssteg
- 11: Faser
- 12: Anbringbereich

## Patentansprüche

1. Drahtgrundkörper zum Verstärken einer Dichtung aus elastischem Material, wie einer Türdichtung, wobei der Drahtgrundkörper (1) einerseits einen Draht (2) aufweist, der sich in mäanderförmigen Buchten (3) entlang einer Längsachse (4) des Drahtgrundkörpers (1) erstreckt und um zumindest eine zur Längsachse (4) parallele Biegeachse (7) gebogen ist, sowie andererseits mehrere den Draht (2) im Wesentlichen rechtwinklig kreuzende und vorzugsweise stauchfest ausgebildete Zugmittel (5) aufweist, die zum Draht (2) lagebezogen relativ zueinander festgelegt sind, **dadurch gekennzeichnet, dass** die an außen liegenden Enden der Buchten angebrachten Zugmittel (5) zu einem weiter innen liegenden Zugmittel (5) so ausgebildet und an dem Draht (2) angebracht sind, dass bei Biegung des Drahtgrundkörpers (1) um eine quer zur Biegeachse (7) angeordnete Umformachse (8) eine Verformung des Drahtgrundkörpers (1) im Bereich des Zugmittels (5) größtenteils unterbunden ist.

2. Drahtgrundkörper nach Anspruch 1, **dadurch gekennzeichnet, dass** die Verbindung zwischen dem an den Enden der Buchten (3) befindlichen Zugmittel (5) und dem Draht (2) besonders fest ausgebildet ist und/oder der Drahtgrundkörper um zwei zur Längsachse parallel angeordnete Biegeachsen im Wesentlichen U-förmig gebogen ist.

3. Drahtgrundkörper nach Anspruch 2, **dadurch gekennzeichnet, dass** die Verbindung als Lötverbindung, als Schweißverbindung oder als Klebeverbindung ausgebildet ist.

4. Drahtgrundkörper nach Anspruch 2 oder 3, **dadurch gekennzeichnet, dass** die Verbindung über eine Faser (11) realisiert ist, die den Draht (2) mit dem Zugmittel (5) verknüpft.

5. Drahtgrundkörper nach einem der Ansprüche 1 bis 4, **dadurch gekennzeichnet, dass** die an den Enden der Buchten (3) befindlichen Zugmittel (5) dicker als ein weiter innen angebrachtes Zugmittel (5) ausgebildet sind.

6. Drahtgrundkörper nach einem der Ansprüche 1 bis 5, **dadurch gekennzeichnet, dass** die an den Enden der Buchten (3) befindlichen Zugmittel (5) aus mehreren ineinander verflochtenen Drahtsträngen aufgebaut sind.

7. Drahtgrundkörper nach einem der Ansprüche 1 bis 6, **dadurch gekennzeichnet, dass** der Drahtgrundkörper (1) als Gewirk, wie ein Gestrick oder eine Häkelware ausgebildet ist.

8. Drahtgrundkörper nach einem der Ansprüche 1 bis 7, **dadurch gekennzeichnet, dass** der Drahtgrundkörper (1) als Geflecht ausgebildet ist.

9. Drahtgrundkörper nach einem der Ansprüche 1 bis 8, **dadurch gekennzeichnet, dass** zumindest einer der Drähte eine Korrosionsbeschichtung aufweist.

10. Drahtgrundkörper nach Anspruch 9, **dadurch gekennzeichnet, dass** die Korrosionsbeschichtung als Ölbeschichtung oder als chemischer Schutz ausgeführt ist.

11. Drahtgrundkörper nach einem der Ansprüche 1 bis 10, **dadurch gekennzeichnet, dass** die Umformachse (8) orthogonal zur Biegeachse (7) angeordnet ist.

12. Dichtung mit einem Drahtgrundkörper nach einem der vorhergehenden Ansprüche.
